# FASCICULE DE BREVET EUROPEEN

(11) **EP 3 433 507 B1**
(45) Date de publication et mention de la délivrance du brevet: **15.07.2020**
(21) Numéro de dépôt: 17716571.9
(22) Date de dépôt: 21.03.2017
(51) Int. Cl.: F16D 59/02, B60T 17/08

(54) **SYSTÈME DE FREINAGE FERROVIAIRE POUR VÉHICULE FERROVIAIRE**
SCHIENENBREMSSYSTEM FÜR EIN SCHIENENFAHRZEUG
RAILROAD BRAKE SYSTEM FOR RAILROAD VEHICLE

(30) Priorité: 21.03.2016 FR 1652420
(43) Date de publication de la demande: 30.01.2019
(73) Titulaire: Faiveley Transport Amiens, 80000 Amiens (FR)
(72) Inventeur: GONCALVES, Claudino, 80620 RIBEAUCOURT (FR); BEAUVOIS, Damien, 80000 AMIENS (FR)
(74) Mandataire: Santarelli
(86) Numéro de dépôt international: PCT/FR2017/050658
(87) Numéro de publication internationale: WO 2017/162978

(56) Documents cités:
- KR-A- 20080 043 025
- US-A- 4 351 423
- US-A1- 2010 193 299
- US-B1- 6 477 939

## Description

### DOMAINE DE L'INVENTION

L'invention concerne le domaine du freinage des véhicules ferroviaires et plus particulièrement les systèmes de freinage ferroviaires pour véhicule ferroviaire pourvus d'un frein de parking configuré pour agir sur un organe de freinage, en particulier lorsque le véhicule ferroviaire est à l'arrêt.

### ARRIERE PLAN TECHNOLOGIQUE

Les véhicules ferroviaires sont généralement équipés d'étriers de frein de service et/ou de parking pourvus d'un cylindre de frein de service et/ou de parking.

Ce cylindre comporte un piston de freinage mobile d'une part, sous l'effet de l'action d'un ou plusieurs ressorts et d'autre part, sous l'effet d'un fluide sous pression.

Le déplacement du piston de freinage sous l'effet des ressorts entraîne une action de freinage telle que le serrage d'un disque de frein entre deux garnitures.

Au contraire, le déplacement du piston de freinage sous l'effet du fluide sous pression entraîne une action inverse au freinage, à savoir le desserrage du disque de frein et permet ainsi le retrait du frein.

Plus précisément, ce type de cylindre de freinage comporte un corps dans lequel et par rapport auquel le piston de freinage est mobile pour agir sur l'organe de freinage par l'intermédiaire d'une tige de poussée.

Le cylindre de frein comporte également une cavité ménagée dans le corps et prévue pour recevoir les ressorts, ainsi qu'une chambre de pression formée au moins partiellement dans la cavité, délimitée notamment par le piston de freinage et par le corps, et raccordée par un conduit à une source d'agent de pression.

Lorsque la chambre de pression n'est pas alimentée par la source d'agent de pression, les ressorts sont configurés pour agir sur le piston de freinage pour le mettre dans une position de freinage ; tandis que lorsque la chambre de pression est alimentée par la source d'agent de pression, le piston de freinage agit en l'encontre des ressorts pour revenir dans une position de repos où le frein est armé mais non appliqué et les ressorts sont comprimés.

En d'autres termes, pour armer le frein, la chambre de pression est alimentée en agent de pression, aussi appelé fluide sous pression, via la source correspondante de sorte à déplacer le piston de freinage dans le corps et comprimer les ressorts ; tandis que pour appliquer le frein, la chambre de pression est vidangée de sorte que les ressorts poussent le piston de freinage.

Le document US 6 477 939 B1 décrit un système de freinage comportant un frein de parking.

### OBJET DE L'INVENTION

L'invention concerne un système de freinage pour véhicule ferroviaire, pourvu d'un frein de parking présentant, notamment en termes de sûreté, des performances améliorées par rapport au système de freinage de l'art antérieur susmentionné, tout en étant simple, commode et économique.

L'invention a ainsi pour objet, sous un premier aspect, un système de freinage ferroviaire pour véhicule ferroviaire à organes de freinage à au moins une garniture et à au moins un disque, comportant un frein de parking ayant un corps présentant une cavité, un support garniture mobile par rapport audit corps et configuré pour agir sur au moins un dit organe de freinage, ainsi qu'un actionneur comportant un piston de freinage au moins partiellement logé dans ladite cavité, mobile par rapport audit corps et configuré pour agir sur ledit support garniture ; ledit système présentant une première configuration où ledit piston de freinage est dans une position de repos dans laquelle il n'agit pas sur ledit support garniture et il n'applique aucun effort sur ledit au moins un organe de freinage, grâce à quoi ledit frein de parking n'est pas appliqué, ainsi qu'une deuxième configuration où ledit piston de freinage est dans une position de travail dans laquelle il agit sur ledit support garniture et il applique un effort prédéterminé sur ledit au moins un organe de freinage, grâce à quoi ledit frein de parking est appliqué ; ledit système étant caractérisé en ce qu'il présente en outre une troisième configuration où, lorsque ledit véhicule ferroviaire n'est pas à l'arrêt et que la température ambiante dans l'environnement dudit organe de freinage est supérieure à une valeur seuil prédéterminée, il force le déplacement dudit piston de freinage de sa position de travail vers une position fusible différente de sa position de repos, position fusible dans laquelle l'effort appliqué sur ledit au moins un organe de freinage est limité ou annulé

Le système de freinage selon l'invention permet, en forçant le piston de freinage à quitter sa position de travail, de limiter ou d'annuler l'élévation de température issue du frottement des garnitures sur le disque alors que ce dernier est en rotation.

Sans le système de freinage selon l'invention, l'élévation de température induite pourrait détériorer le disque et/ou le système de freinage et/ou l'environnement immédiat de ce système et de l'organe de freinage, voire plus généralement le bogie sur lequel sont montés ce système et cet organe.

Il est à noter que le frein de parking est normalement appliqué lorsque le véhicule ferroviaire est à l'arrêt, de sorte à maintenir immobilisé ce véhicule et permettre à son utilisateur et en particulier son conducteur de quitter le véhicule.

Le frein de parking n'est pas dimensionné pour stopper le véhicule ferroviaire en roulage mais seulement pour le maintenir à l'arrêt.

Le système selon l'invention permet donc de fournir une solution à la situation anormale où le piston se retrouve de manière intempestive en position de travail alors que le véhicule ferroviaire est en roulage et donc pas à l'arrêt. De par le dimensionnement du frein de parking, cette situation anormale pourrait ne pas être détectée par le conducteur du véhicule ferroviaire et grâce à l'invention, le véhicule ferroviaire pourrait continuer à rouler sans risque. Au contraire, cette situation pourrait être détectée par le conducteur et ce dernier pourrait, grâce à l'invention, terminer son roulage sans risque.

Le système selon l'invention autorise également, grâce à sa sûreté, de sur-dimensionner le frein de parking par rapport aux freins de parking classiques, de sorte par exemple à diminuer leur nombre sur chaque bogie du véhicule ferroviaire et ainsi fournir un système de freinage par boggie finalement plus compact et/ou plus performant tout en étant particulièrement sûr.

Selon des caractéristiques préférées, simples, commodes et économiques du système selon l'invention :
- ledit actionneur comporte en outre au moins un organe ressort logé dans ladite cavité, ledit piston de freinage délimite avec ledit corps une chambre de pression configurée pour être raccordée par un conduit à une source d'agent de pression et, dans ladite première configuration dudit système, ladite chambre de pression est alimentée par ladite source d'agent de pression tandis que dans ladite deuxième configuration dudit système, ladite chambre de pression n'est pas alimentée par ladite source d'agent de pression ;
- ledit système comporte un organe effaçable de transmission d'effort distinct dudit actionneur et dudit support garniture et configuré pour mettre ledit piston de freinage dans sa position fusible ;
- ledit organe effaçable de transmission d'effort est disposé dans ledit corps entre ledit piston de freinage et ledit support garniture ;
- ledit organe effaçable de transmission d'effort est disposé dans ledit corps entre ledit support garniture et ladite garniture ;
- dans sa position fusible, ledit piston de freinage est mis en butée contre une paroi interne dudit corps délimitant ladite cavité et optionnellement ladite chambre de pression ;
- ledit organe effaçable de transmission d'effort est formé par au moins une pièce réalisée en un matériau prédéterminé qui, sous ladite valeur seuil prédéterminée de température, se trouve dans un état rigide lui permettant de transmettre l'effort appliqué par ledit piston de freinage et/ou par ledit support garniture sur ledit au moins un organe de freinage et qui, au-dessus de ladite valeur seuil prédéterminée de température, se trouve dans un état déformé où ledit organe effaçable ne transmet plus ledit effort ;
- ledit organe effaçable de transmission d'effort est formé par une première pièce et une deuxième pièce assujettie mécaniquement par une liaison frangible, notamment par collage ou soudage ou emmanchement, sur ladite première pièce ; avec, sous ladite valeur seuil prédéterminée de température, lesdites première et deuxième pièces qui sont solidaires et permettent de transmettre l'effort appliqué par ledit piston de freinage et/ou par ledit support garniture sur ledit au moins un organe de freinage et avec, au-dessus de ladite valeur seuil prédéterminée de température, ladite deuxième pièce qui se désolidarise de ladite première pièce au niveau de ladite liaison frangible et qui est entraînée en translation par ledit piston de freinage et/ou par ledit support garniture par rapport à ladite première pièce ; ledit organe effaçable ne transmettant plus ledit effort ;
- ledit organe effaçable de transmission d'effort est formé par une enveloppe déformable remplie seulement partiellement d'un volume d'un matériau prédéterminé qui, sous ladite valeur seuil prédéterminée de température, se trouve dans un état rigide lui permettant de transmettre l'effort appliqué par ledit piston de freinage et/ou par ledit support garniture sur ledit au moins un organe de freinage et qui, au-dessus de ladite valeur seuil prédéterminée de température, flue et migre dans une zone vide de ladite enveloppe, laquelle enveloppe se déforme de sorte que ledit organe effaçable ne transmet plus ledit effort ;
- ledit organe effaçable de transmission d'effort est formé par une pièce interposée entre une tige de poussée dudit piston de freinage et une paroi interne dudit corps délimitant ladite cavité, ladite pièce étant réalisée en un matériau à mémoire de forme qui, sous ladite valeur seuil prédéterminée de température, se trouve dans un premier état permettant de transmettre l'effort appliqué par ledit piston de freinage sur ledit au moins un organe de freinage et qui, au-dessus de ladite valeur seuil prédéterminée de température, se trouve dans second état dans lequel elle repousse ledit piston de freinage dans ladite cavité de sorte que ledit organe effaçable empêche de transmettre ledit effort ;
- ledit piston de freinage est pourvu d'une tête logée dans ladite cavité, d'une tige de poussée distincte de ladite tête, saillant de ladite cavité et présentant une extrémité libre en appui sur ledit support garniture, et d'un mécanisme débrayable d'assujettissement mécanique de ladite tige de poussée à ladite tête ; et ledit organe effaçable de transmission d'effort est formé par une pièce interposée entre une première butée formée par un tronçon dudit mécanisme débrayable et une seconde butée formée par une nervure ménagée sur ladite tige de poussée, ladite pièce étant réalisée en un matériau à mémoire de forme qui, sous ladite valeur seuil prédéterminée de température, se trouve dans un premier état où ladite tige de poussée et ladite tête sont assujetties mécaniquement de sorte à appliquer l'effort sur ledit au moins un organe de freinage et qui, au-dessus de ladite valeur seuil prédéterminée de température, se trouve dans second état dans lequel elle actionne ledit mécanisme débrayable de sorte à dés-assujettir mécaniquement ladite tige de poussée et ladite tête et ainsi supprimer ledit effort ;
- ledit organe effaçable de transmission d'effort est formé par un vérin pourvu d'un bras mobile qui, sous ladite valeur seuil prédéterminée de température, admet une position déployée dans laquelle il transmet l'effort appliqué par ledit piston de freinage et/ou par ledit support garniture sur ledit au moins un organe de freinage et qui, au-dessus de ladite valeur seuil prédéterminée de température, admet une position rétractée dans laquelle il ne transmet plus ledit effort ;
- ledit système comporte en outre un capteur de température disposé à proximité immédiate dudit au moins un organe de freinage ainsi qu'une unité de contrôle et de commande dudit vérin configuré pour contrôler et commander ledit bras mobile en fonction de ladite température ambiante ;
- ledit organe effaçable de transmission d'effort est formé par une pièce interposée entre ledit support garniture et ladite au moins une garniture et réalisée en un matériau prédéterminé qui, sous ladite valeur seuil prédéterminée de température, assujettit mécaniquement ladite au moins une garniture sur ledit support garniture pour transmettre l'effort appliqué par ce dernier sur ledit au moins un disque et qui, au-dessus de ladite valeur seuil prédéterminée de température, libère ladite au moins une garniture dudit support garniture pour annuler ledit effort ; et/ou
- ladite pièce forme une couche adhésive interposée entre ledit support garniture et ladite au moins une garniture, ou est formée par au moins un plot de fixation prenant racine sur l'un dudit support garniture ou de ladite au moins une garniture et étant reçu dans au moins un orifice de l'autre de ladite au moins une garniture ou dudit support garniture.

L'invention a aussi pour objet, sous un second aspect, un bogie configuré pour équiper un véhicule ferroviaire, comportant un organe de freinage pourvu d'au moins une garniture et d'un disque, ainsi qu'un système de freinage ferroviaire tel que décrit ci-dessus, dont ledit frein de parking est configuré pour appliquer un effort sur ledit disque dudit organe de freinage pour véhicule ferroviaire.

Le bogie selon l'invention est particulièrement compact et économique puisqu'il ne peut comporter par exemple qu'un seul système de freinage ferroviaire dit de parking, lequel est dimensionné pour maintenir à l'arrêt ledit bogie en s'appliquant sur un disque central dédié, de sorte par exemple à réduire le poids du bogie, tout en assurant des performances de freinage au moins similaires, voire supérieures.

### BREVE DESCRIPTION DES DESSINS

On va maintenant poursuivre l'exposé de l'invention par la description d'exemples de réalisation, donnée ci-après à titre illustratif et non limitatif, en référence aux dessins annexés sur lesquels :
- la figure 1 illustre schématiquement un système de freinage ferroviaire conforme à un premier mode de réalisation de l'invention, dans une configuration sur la partie gauche de la figure où le frein de parking est appliqué et dans une autre configuration sur la partie droite de la figure où l'application du frein de parking est limitée ou annulée ;
- la figure 2 est une vue similaire à celle de la figure 1, illustrant une variante de réalisation du système illustré sur cette figure ;
- la figure 3 illustre schématiquement un système de freinage ferroviaire conforme à un deuxième mode de réalisation de l'invention, le frein de parking étant montré, comme sur la figure 1, dans différentes configurations ;
- la figure 4 illustre schématiquement un système de freinage ferroviaire conforme à un troisième mode de réalisation de l'invention, le frein de parking étant montré, comme sur la figure 1, dans différentes configurations ;
- la figure 5 est une vue similaire à celle de la figure 4, illustrant une variante de réalisation du système illustré sur cette figure ; et
- les figures 6 à 9 illustrent schématiquement des systèmes de freinage ferroviaire conformes respectivement à des quatrième, cinquième, sixième et septième modes de réalisation de l'invention, le frein de parking étant à chaque fois montré, comme sur la figure 1, dans différentes configurations.

### DESCRIPTION DETAILLEE D'UN EXEMPLE DE REALISATION

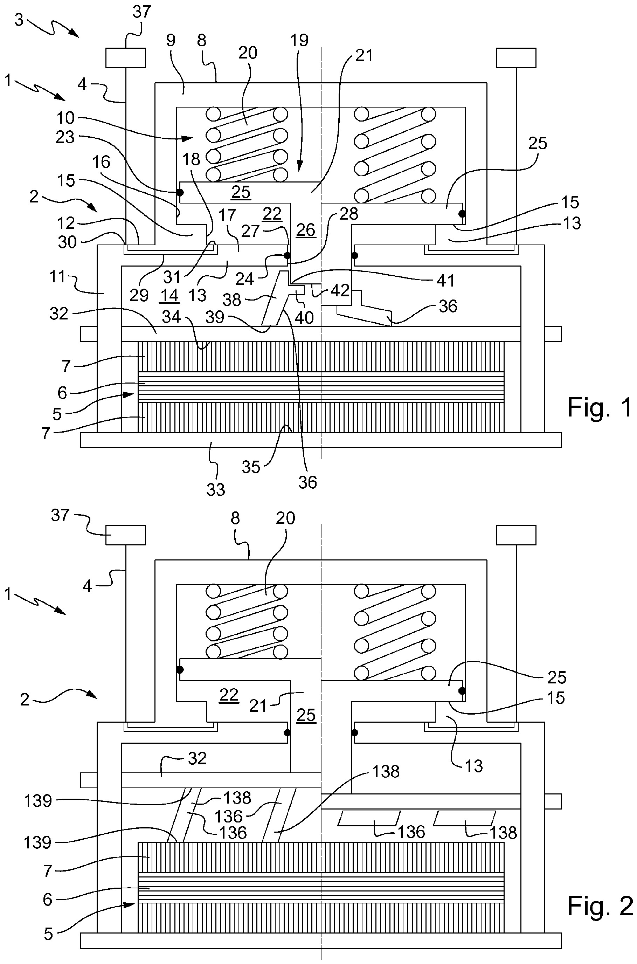

La figure 1 représente schématiquement un système de freinage ferroviaire 1 pour un véhicule ferroviaire (non représenté), pourvu d'un frein de parking 2 formé ici par un étrier mobile et flottant, visible dans deux configurations distinctes. Sur la partie gauche de la figure 1, le frein de parking 2 est appliqué tandis que sur la partie droite de cette figure, l'action du frein de parking 2 est annulée.

Le système de freinage ferroviaire 1 comporte en outre un réseau 3 d'alimentation en agent de pression, ici pneumatique, connecté au frein de parking 2 par l'intermédiaire d'une conduite de distribution 4, ainsi qu'un organe de freinage 5 pourvu ici d'un disque de frein 6 et de deux garnitures 7 configurées pour prendre en sandwich le disque de frein 6.

Le frein de parking 2 comporte un corps 8 pourvu d'une première portion 9 dans laquelle est ménagée une cavité 10, et d'une seconde portion 11 raccordant la première portion 9 par un premier épaulement 12.

Le corps 8 est en outre pourvu d'une paroi interne 13 délimitant la cavité 10 ménagée dans la première portion 9 et formant une barrière entre cette cavité 10 et un espace de serrage 14 défini par la seconde portion 11.

Cette paroi interne 13 présente un premier tronçon 15 s'étendant depuis une face interne 16 de la première portion 9 et un second tronçon 17 se raccordant au premier tronçon 15 par l'intermédiaire d'un second épaulement 18.

Le frein de parking 2 comporte en outre un actionneur 19 pourvu d'un organe ressort 20 (appelé aussi organe à ressorts) logé dans la cavité 10 de la première portion 9 et d'un piston de freinage 21 mobile par rapport au corps 8 et délimitant avec le corps 8 une chambre de pression 22 de frein de parking.

Cette chambre de pression 22 est ménagée dans la cavité 10 et délimitée par le piston de freinage 21, par la face interne 16 de la première portion 9 et par la paroi interne 13 du corps 8.

Le piston de freinage 21 comporte une tête 25 logée dans la cavité 10 et une tige de poussée 26 s'étendant depuis de la tête 25 et saillant dans l'espace de serrage 14 au travers d'une ouverture 27 ménagée dans la paroi interne 13 du corps 8.

La tête 25 est mobile par rapport au corps 8 dans la cavité 10 selon une première direction axiale, et la tige de poussée 26 est également mobile par rapport au corps 8 à la fois dans la cavité 10 et dans l'espace de serrage 14 suivant la première direction axiale.

Le frein de parking 2 est en outre pourvu d'un premier organe d'étanchéité 23 interposé entre la tête 25 du piston de freinage 21 et la face interne 16 de la première portion 9, et d'un second organe d'étanchéité 23 interposé entre un bord libre 28 de la paroi interne 13 au niveau de l'ouverture 27 et la tige de poussée 26 du piston de freinage 21.

La chambre de pression 22 est raccordée à la conduite de distribution 4 par un canal 29 ménagé dans le corps 8, lequel canal 29 débouche d'une part, à une première extrémité, à l'extérieur du corps 8 par un premier orifice 30 où se raccord la conduite 4 et d'autre part, à une seconde extrémité opposée à la première extrémité, dans la chambre de pression 22 par un second orifice 31.

Le frein de parking 2 comporte en outre un premier support garniture 32 mobile par rapport au corps 8 dans l'espace de serrage 14, ainsi qu'un second support garniture 33 monté solidaire à une extrémité de la deuxième portion 11 du corps 8.

Le premier support garniture 32 présente une face de montage 34 sur laquelle est assujettie une des garnitures 7 et le second support garniture 33 présente également une face de montage 35 sur laquelle est assujettie l'autre des garnitures 7.

Le frein de parking 2 est ici configuré de sorte que le piston de freinage 21 est prévu pour agir sur le premier support garniture 32 qui est mobile et lui-même prévu pour agir sur le disque de frein 6 par l'intermédiaire de la garniture 7 respective.

Comme mentionné plus haut, le frein de parking 2 est ici agencé comme un étrier flottant de sorte que c'est d'abord l'action de déplacer dans la première direction axiale, vers le disque 6, l'ensemble piston de freinage 21, premier support garniture 32 et garniture respective 7, qui vient appliquer un effort sur un côté du disque 6 et, lorsque cet effort atteint une valeur seuil prédéterminée, c'est l'ensemble du corps 8 qui se déplace dans une seconde direction axiale opposée à la première direction axiale, pour rapprocher le second support garniture 33 et sa garniture 7 respective pour venir appliquer également un effort sur un côté opposé du disque 6.

Il est à noter que le disque de frein 6 est ici un disque dédié au frein de parking 2 et qu'ils sont tous deux montés sur un bogie (ou essieu, non représenté) du véhicule ferroviaire. Le bogie peut comporter un unique ou plusieurs frein(s) de parking 2 et un unique ou plusieurs disque(s) 6 dédié(s).

Le frein de parking 2 comporte en outre un organe effaçable de transmission d'effort 36, distinct de l'actionneur 19 et des premier et second supports garniture 32 et 33.

Cet organe effaçable de transmission d'effort 36 est ici disposé dans l'espace de serrage 14 du corps 8, entre la tige de poussée 26 du piston de freinage 21 et le premier support garniture 32.

Cet organe effaçable de transmission d'effort 36 est formé par une pièce présentant ici une branche longitudinale 38 pourvue d'un bord libre d'appui 39, et une nervure transversale 40 saillant de la branche longitudinale 38 de sorte à former un logement 41 pour une extrémité libre 42 de la tige de poussée 26 du piston de freinage 21.

Lorsque la chambre de pression 22 est alimentée par une source d'agent de pression 37 alimentant la conduite de distribution 4, le système 1 est configuré pour mettre le piston de freinage 21 dans une position de repos dans laquelle il comprime l'organe ressort 20, il n'agit pas sur le premier support garniture 32 et il n'applique aucun effort sur le disque de frein 6 ; grâce à quoi le frein de parking 2 n'est pas appliqué. Cet état correspondant à une première configuration du système 1 n'est pas représenté sur la figure 1.

Lorsque la chambre de pression 22 est volontairement vidangée ou n'est pas alimentée par la source d'agent de pression 37, le système 1 est configuré pour mettre le piston de freinage 21 dans une position de travail dans laquelle il est sollicité par l'organe ressort 20, il agit sur le premier support garniture 32 par l'intermédiaire de l'organe effaçable de transmission d'effort 36 dont le bord libre d'appui 39 de sa branche longitudinale 38 qui est au contact de ce premier support garniture 32, et il applique un effort prédéterminé sur le disque de frein 6 par l'intermédiaire de la garniture 7 respective ; grâce à quoi le frein de parking 2 est appliqué. Cet état correspondant à une deuxième configuration du système 1 est représenté sur la partie gauche de la figure 1.

La pièce formant l'organe effaçable de transmission d'effort 36 est ici réalisée en un matériau prédéterminé qui, sous une valeur seuil prédéterminée de température, se trouve dans un état rigide lui permettant de transmettre l'effort appliqué par le piston de freinage 21 sur le premier support garniture 32 et donc sur le disque de frein 6 par l'intermédiaire de la garniture respective 7 ; et qui, au-dessus de la valeur seuil prédéterminée de température, se trouve dans un état déformé où cet organe effaçable 36 pivote, ou plus généralement s'efface, et ne transmet plus l'effort.

La valeur seuil prédéterminée est par exemple comprise entre environ 100 °C et 200°C et le matériau prédéterminé de l'organe effaçable 36 est par exemple un plastique, un caoutchouc ou un métal tel que de l'étain.

L'organe effaçable de transmission d'effort 36 est donc configuré pour mettre le piston de freinage 21 dans une position dite fusible, où il est en butée contre la paroi interne 13 du corps 8 et, plus précisément, où sa tête 25 vient en appui contre le premier tronçon 15 de cette paroi interne 13. Cet état correspondant à une troisième configuration du système lest représenté sur la partie droite de la figure 1.

Ainsi, lorsque la chambre de pression 22 est vidangée ou n'est plus alimentée, de manière intempestive, et lorsque le véhicule ferroviaire n'est pas à l'arrêt, la température ambiante dans l'environnement du disque de frein 6 augmente jusqu'à être supérieure à la valeur seuil prédéterminée ; ce qui entraîne le changement d'état de l'organe effaçable de transmission d'effort 36 vers son état déformé.

On notera que la vidange ou la non alimentation, intempestive, de la chambre de pression peut être due à des fuites dans la chambre de pression ou bien peut être causée en amont du frein de parking, dans le système voire dans le véhicule ferroviaire.

On notera au surplus que le changement d'état de l'organe effaçable de transmission d'effort en fonction de la température est lié aux changements induits d'au moins certaines de leurs propriétés mécaniques, notamment intrinsèques ; et que ces changements induits se produisent principalement parce que l'organe effaçable de transmission est sous charge, c'est-à-dire soumis à un effort.

Le cas échéant, le système 1 force le déplacement du piston de freinage 21 de sa position de travail vers sa position fusible différente de sa position de repos, position fusible dans laquelle l'effort appliqué sur le disque de frein 6 est ici annulé.

Le système 1 illustré sur la figure 1 peut comporter plusieurs organes effaçables de transmission d'effort 36.

La figure 2 représente une variante de réalisation du système de freinage ferroviaire tel que décrit ci-dessus.

D'une manière générale, on a employé pour les éléments similaires, les mêmes numéros de références, sauf pour l'organe effaçable de transmission d'effort pour lequel les numéros de références ont été additionnés du nombre 100.

Le système 1 comporte ici deux organes effaçable de transmission d'effort 136 qui sont assez similaires à celui illustré sur la figure 1, et sont formés chacun par une pièce présentant ici une unique branche longitudinale 138 qui est disposée dans le corps 8 entre le support garniture et la garniture respective 7.

Dans la première configuration du système (non illustrée), lorsque la chambre de pression 22 est alimentée par la source d'agent de pression 37 alimentant la conduite de distribution 4, le piston de freinage 21 est dans sa position de repos dans laquelle il comprime l'organe ressort 20, il n'agit pas sur le premier support garniture 32 et il n'applique aucun effort sur le disque de frein 6 ; grâce à quoi le frein de parking 2 n'est pas appliqué.

Dans la deuxième configuration du système (partie gauche de la figure 2), lorsque la chambre de pression 22 est volontairement vidangée ou n'est pas alimentée par la source d'agent de pression 37, le piston de freinage 21 est dans sa position de travail dans laquelle il est sollicité par l'organe ressort 20, il agit sur le premier support garniture 32 qui agit sur la garniture 7 respective par l'intermédiaire de chaque organe effaçable de transmission d'effort 136 dont des bords libres d'appui 139 de sa branche longitudinale 138 sont respectivement au contact de ce premier support garniture 32 et de cette garniture 7 respective, et il applique un effort prédéterminé sur le disque de frein 6 par l'intermédiaire de la garniture 7 respective ; grâce à quoi le frein de parking 2 est appliqué.

La pièce formant chaque organe effaçable de transmission d'effort 136 est ici réalisée en un matériau prédéterminé qui, sous une valeur seuil prédéterminée de température, se trouve dans un état rigide lui permettant de transmettre l'effort appliqué par le piston de freinage 21 et par le premier support garniture 32 sur la garniture 7 respective et donc sur le disque de frein 6 par ; et qui, au-dessus de la valeur seuil prédéterminée de température, se trouve dans un état déformé où chaque organe effaçable 136 pivote, ou plus généralement s'efface, et ne transmet plus l'effort.

La valeur seuil prédéterminée est par exemple comprise entre environ 100 °C et 200 °C et le matériau prédéterminé de chaque organe effaçable 136 est par exemple un plastique, un caoutchouc ou un métal tel que de l'étain.

Ainsi, dans la troisième configuration du système (partie droite de la figure 2), lorsque la chambre de pression 22 est vidangée ou n'est plus alimentée, de manière intempestive, et lorsque le véhicule ferroviaire n'est pas à l'arrêt, la température ambiante dans l'environnement du disque de frein 6 augmente jusqu'à être supérieure à la valeur seuil prédéterminée ; ce qui entraîne le changement d'état de chaque organe effaçable de transmission d'effort 136 vers son état déformé pour forcer le déplacement du piston de freinage 21 de sa position de travail vers sa position fusible différente de sa position de repos, position fusible où il est en butée contre la paroi interne 13 du corps 8 et, plus précisément, où sa tête 25 vient en appui contre le premier tronçon 15 de cette paroi interne 13, de sorte à annuler l'effort appliqué sur le disque de frein 6.

Le système 1 illustré sur la figure 2 peut ne comporter qu'un seul organe effaçable de transmission d'effort 136, ou en comporter plus que deux.

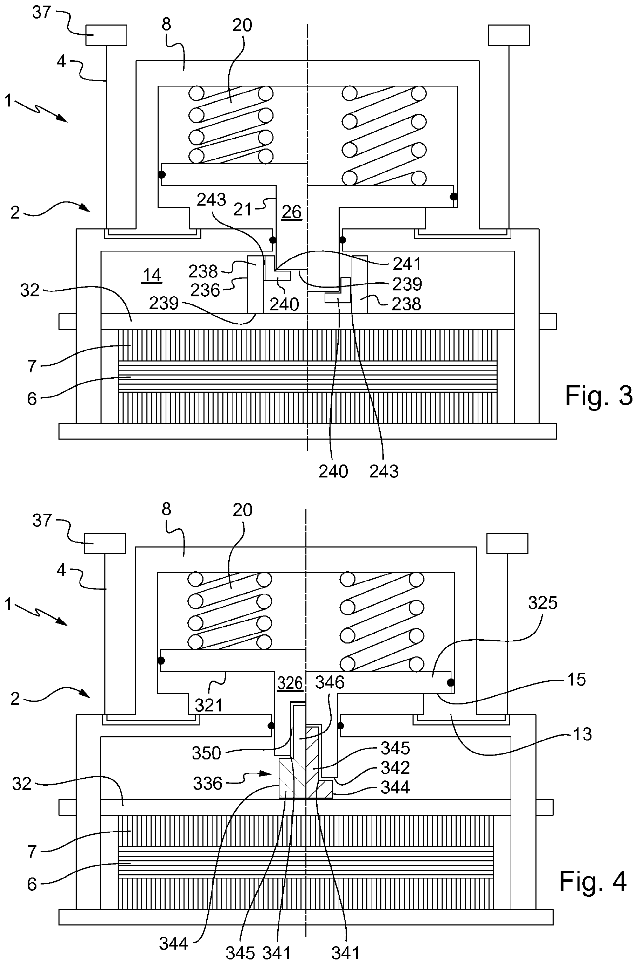

La figure 3 représente un deuxième mode de réalisation du système de freinage ferroviaire tel que décrit en référence à la figure 1.

D'une manière générale, on a employé pour les éléments similaires, les mêmes numéros de références, sauf pour l'organe effaçable de transmission d'effort pour lequel les numéros de références ont été additionnés du nombre 200.

L'organe effaçable de transmission d'effort 236 est ici disposé dans l'espace de serrage 14 du corps 8, entre la tige de poussée 26 du piston de freinage 21 et le premier support garniture 32.

Cet organe effaçable de transmission d'effort 236 est formé par une première pièce longitudinale 238 pourvue d'un bord libre d'appui 239, et deuxième pièce sensiblement en forme d'équerre 240 de sorte à former un logement 241 pour une extrémité libre 42 de la tige de poussée 26 du piston de freinage 21.

La deuxième pièce en forme d'équerre 240 est assujettie mécaniquement par une liaison frangible 243, notamment par collage ou soudage ou emmanchement, sur la première pièce longitudinale 238.

La liaison frangible 243 de l'organe effaçable de transmission d'effort 236 est configurée pour, sous une valeur seuil prédéterminée de température, solidariser les première et deuxième pièces 238 et 240 et, au-dessus de la valeur seuil prédéterminée de température, désolidariser les première et deuxième pièces 238 et 240 et permettre le déplacement en translation (notamment dans la première direction axiale) de la deuxième pièce en forme d'équerre 240 par rapport à la première pièce longitudinale 238.

La valeur seuil prédéterminée est par exemple comprise entre environ 100 °C et 200 °C.

Dans la première configuration du système (non illustrée), lorsque la chambre de pression 22 est alimentée par la source d'agent de pression 37 alimentant la conduite de distribution 4, le piston de freinage 21 est dans sa position de repos dans laquelle il comprime l'organe ressort 20, il n'agit pas sur le premier support garniture 32 et il n'applique aucun effort sur le disque de frein 6 ; grâce à quoi le frein de parking 2 n'est pas appliqué.

Dans la deuxième configuration du système (partie gauche de la figure 3), lorsque la chambre de pression 22 est volontairement vidangée ou n'est pas alimentée par la source d'agent de pression 37, le piston de freinage 21 est dans sa position de travail dans laquelle il est sollicité par l'organe ressort 20, il agit sur le premier support garniture 32 par l'intermédiaire de l'organe effaçable de transmission d'effort 236 dont les première et deuxième pièces 238 et 240 sont solidaires et dont le bord libre 239 est au contact du premier support garniture 32, et il applique un effort prédéterminé sur le disque de frein 6 par l'intermédiaire de la garniture 7 respective ; grâce à quoi le frein de parking 2 est appliqué.

Dans la troisième configuration du système (partie droite de la figure 3), lorsque la chambre de pression 22 est vidangée ou n'est plus alimentée, de manière intempestive, et lorsque le véhicule ferroviaire n'est pas à l'arrêt, la température ambiante dans l'environnement du disque de frein 6 augmente jusqu'à être supérieure à la valeur seuil prédéterminée ; ce qui entraîne la rupture de la liaison frangible 243 et donc la désolidarisation des première et deuxième pièces 238 et 240 pour forcer le déplacement du piston de freinage 21 de sa position de travail vers sa position fusible différente de sa position de repos, position fusible où il est en butée contre la paroi interne 13 du corps 8 et, plus précisément, où sa tête 25 vient en appui contre le premier tronçon 15 de cette paroi interne 13, de sorte à annuler l'effort appliqué sur le disque de frein 6.

L'organe effaçable de transmission d'effort 236 peut être disposé entre le support garniture et la garniture respective plutôt qu'entre le piston de freinage et le support garniture et/ou le système 1 illustré sur la figure 3 peut comporter plusieurs organes effaçables de transmission d'effort 236.

La figure 4 représente un troisième mode de réalisation du système de freinage ferroviaire tel que décrit en référence à la figure 1.

D'une manière générale, on a employé pour les éléments similaires, les mêmes numéros de références, sauf pour le piston de freinage et l'organe effaçable de transmission d'effort pour lequel les numéros de références ont été additionnés du nombre 300.

L'organe effaçable de transmission d'effort 336 est ici disposé dans l'espace de serrage 14 du corps 8, entre le piston de freinage 321 et le premier support garniture 32.

La tige de poussée 326 du piston de freinage 321 est pourvue ici d'un évidement 350.

L'organe effaçable de transmission d'effort 336 est formé par une enveloppe déformable 344 remplie seulement partiellement d'un volume d'un matériau prédéterminé 345 qui, sous une valeur seuil prédéterminée de température, se trouve dans un état rigide lui permettant de transmettre un effort donné et qui, au-dessus de la valeur seuil prédéterminée de température, flue et migre dans une zone vide 346 de l'enveloppe. Cette enveloppe 344 se déforme alors de sorte que l'organe effaçable ne transmet plus cet effort.

L'enveloppe déformable 344 présente une portion 347 qui est reçue dans l'évidement 350 de la tige de poussée 326 ainsi qu'un logement déplaçable 341 pour l'extrémité libre 342 de cette tige de poussée 326.

La valeur seuil prédéterminée est par exemple comprise entre environ 100 °C et 200 °C, l'enveloppe 344 est par exemple réalisée en métal, tel que de l'acier, et le matériau prédéterminé 345 contenu dans cette enveloppe 344 est par exemple un plastique, un caoutchouc ou un métal tel que de l'étain.

Dans la première configuration du système (non illustrée), lorsque la chambre de pression 22 est alimentée par la source d'agent de pression 37 alimentant la conduite de distribution 4, le piston de freinage 321 est dans sa position de repos dans laquelle il comprime l'organe ressort 20, il n'agit pas sur le premier support garniture 32 et il n'applique aucun effort sur le disque de frein 6 ; grâce à quoi le frein de parking 2 n'est pas appliqué.

Dans la deuxième configuration du système (partie gauche de la figure 4), lorsque la chambre de pression 22 est volontairement vidangée ou n'est pas alimentée par la source d'agent de pression 37, le piston de freinage 321 est dans sa position de travail dans laquelle il est sollicité par l'organe ressort 20, il agit sur le premier support garniture 32 par l'intermédiaire de l'organe effaçable de transmission d'effort 336 dont l'enveloppe 344 repose sur ce premier support garniture 32, et il applique un effort prédéterminé sur le disque de frein 6 par l'intermédiaire de la garniture 7 respective ; grâce à quoi le frein de parking 2 est appliqué.

Comme mentionné ci-dessus, sous la valeur seuil prédéterminée de température, l'organe effaçable de transmission d'effort 336 se trouve dans un état rigide lui permettant de transmettre l'effort appliqué par le piston de freinage 321 sur le premier support garniture 32 et donc sur la garniture 7 et sur le disque de frein 6 et, au-dessus de la valeur seuil prédéterminée de température, se trouve dans un état déformé où le matériau 345 flue et migre dans la zone vide 346 de l'enveloppe 344 qui se déforme sous l'action de la tige de poussée 326.

Ainsi, dans la troisième configuration du système (partie droite de la figure 4), lorsque la chambre de pression 22 est vidangée ou n'est plus alimentée, de manière intempestive, et lorsque le véhicule ferroviaire n'est pas à l'arrêt, la température ambiante dans l'environnement du disque de frein 6 augmente jusqu'à être supérieure à la valeur seuil prédéterminée ; ce qui entraîne le changement d'état du matériau 345 et de l'enveloppe 344 et le déplacement du logement 341 pour forcer le déplacement de la tête 325 du piston de freinage 321 de sa position de travail vers sa position fusible différente de sa position de repos, position fusible où il est en butée contre le premier tronçon 15 de la paroi interne 13 du corps 8 ; de sorte à annuler l'effort appliqué sur le disque de frein 6.

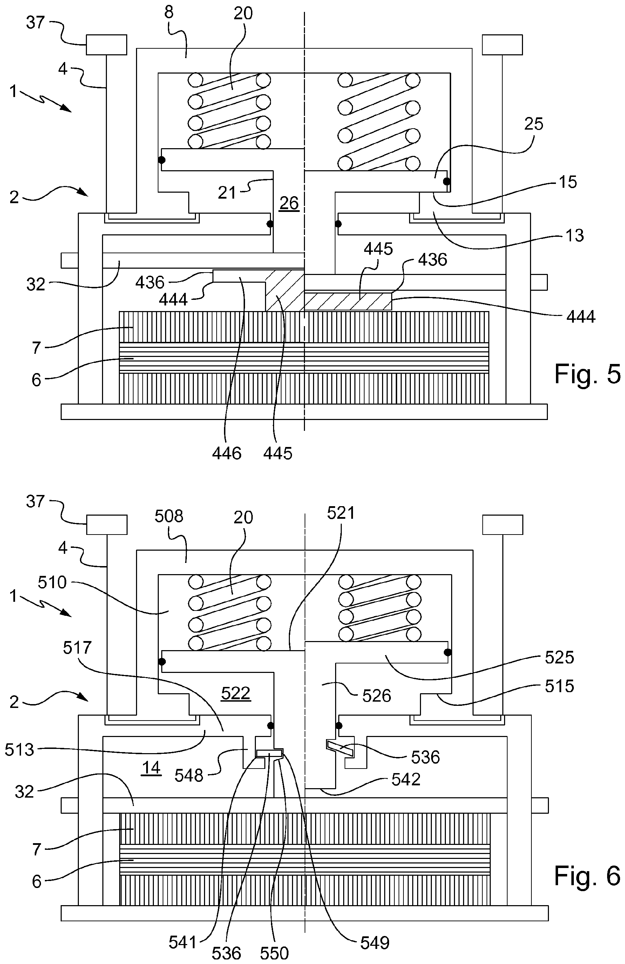

La figure 5 représente une variante de réalisation du système de freinage ferroviaire tel que décrit ci-dessus en référence à la figure 4.

D'une manière générale, on a employé pour les éléments similaires, les mêmes numéros de références que ceux utilisés pour la figure 1, sauf pour l'organe effaçable de transmission d'effort pour lequel les numéros de références ont été additionnés du nombre 400.

L'organe effaçable de transmission d'effort 436 est ici disposé dans le corps 8 entre le support garniture et la garniture respective 7.

L'organe effaçable de transmission d'effort 436 est formé par une enveloppe déformable 444 remplie seulement partiellement d'un volume d'un matériau prédéterminé 445.

Dans la première configuration du système (non illustrée), lorsque la chambre de pression 22 est alimentée par la source d'agent de pression 37 alimentant la conduite de distribution 4, le piston de freinage 21 est dans sa position de repos dans laquelle il comprime l'organe ressort 20, il n'agit pas sur le premier support garniture 32 et il n'applique aucun effort sur le disque de frein 6 ; grâce à quoi le frein de parking 2 n'est pas appliqué.

Dans la deuxième configuration du système (partie gauche de la figure 5), lorsque la chambre de pression 22 est volontairement vidangée ou n'est pas alimentée par la source d'agent de pression 37, le piston de freinage 21 est dans sa position de travail dans laquelle il est sollicité par l'organe ressort 20, il agit sur le premier support garniture 32 qui agit sur la garniture 7 respective par l'intermédiaire de l'organe effaçable de transmission d'effort 436 dont des bords de l'enveloppe 444 sont respectivement au contact de ce premier support garniture 32 et de cette garniture 7 respective, et il applique un effort prédéterminé sur le disque de frein 6 par l'intermédiaire de la garniture 7 respective ; grâce à quoi le frein de parking 2 est appliqué.

L'enveloppe 444 et le matériau 445 qu'elle contient sont configures de telle sorte que, sous une valeur seuil prédéterminée de température, l'organe effaçable de transmission d'effort 436 se trouve dans un état rigide lui permettant de transmettre l'effort appliqué par le piston de freinage 21 et par le premier support garniture 32 sur la garniture 7 et donc sur le disque de frein 6 et, au-dessus de la valeur seuil prédéterminée de température, le matériau 445 flue et migre dans une zone vide 446 de l'enveloppe 444 et cette dernière se déforme sous l'action du piston et du premier support garniture ; de sorte que l'organe effaçable 436 se trouve dans un état déformé dans lequel il ne transmet plus l'effort.

La valeur seuil prédéterminée est par exemple comprise entre environ 100 °C et 200 °C, l'enveloppe 444 est par exemple réalisée en métal, tel que de l'acier, et le matériau prédéterminé 445 contenu dans cette enveloppe 444 est par exemple un plastique, un caoutchouc ou un métal tel que de l'étain.

Ainsi, dans la troisième configuration du système (partie droite de la figure 5), lorsque la chambre de pression 22 est vidangée ou n'est plus alimentée, de manière intempestive, et lorsque le véhicule ferroviaire n'est pas à l'arrêt, la température ambiante dans l'environnement du disque de frein 6 augmente jusqu'à être supérieure à la valeur seuil prédéterminée ; ce qui entraîne le changement d'état du matériau 445 et de l'enveloppe 444, laquelle s'aplatit pour forcer le déplacement de la tête 25 du piston de freinage 21 de sa position de travail vers sa position fusible différente de sa position de repos, position fusible où il est en butée contre le premier tronçon 15 de la paroi interne 13 du corps 8 ; de sorte à annuler l'effort appliqué sur le disque de frein 6.

Sous la valeur seuil prédéterminée de température, l'enveloppe 444 a ici sensiblement une forme de L tandis qu'au-dessus de la valeur seuil prédéterminée de température, l'enveloppe 444 a ici une forme parallélépipédique, aplatie.

Les systèmes 1 illustrés sur les figures 4 et 5 pourraient être pourvus de plusieurs organes effaçables de transmission d'effort 336, 436.

La figure 6 représente un quatrième mode de réalisation du système de freinage ferroviaire tel que décrit en référence à la figure 1.

D'une manière générale, on a employé pour les éléments similaires, les mêmes numéros de références, sauf pour le corps, le piston de freinage et l'organe effaçable de transmission d'effort pour lesquels les numéros de références ont été additionnés du nombre 500.

L'organe effaçable de transmission d'effort 536 est ici formé par une pièce interposée entre la tige de poussée 526 du piston de freinage 521 et la paroi interne 513 du corps 508 délimitant la cavité 510 et la chambre de pression 522.

La paroi interne 513 est pourvue d'une patte de montage 548 s'étendant depuis le second tronçon 517, en saillie dans l'espace de serrage 14.

Cette patte de montage 548 présente une forme sensiblement de L de sorte à former un logement 541 pour la réception d'une première portion d'extrémité de l'organe effaçable 536.

La tige de poussée 526 du piston de freinage 521 présente un évidement 550 formant un logement complémentaire 549 pour la réception d'une seconde portion d'extrémité de l'organe effaçable 536, opposée à sa première portion d'extrémité.

L'organe effaçable 536 est ici réalisé en un matériau à mémoire de forme, par exemple un alliage de titane et de nickel et est configuré pour, sous une valeur seuil prédéterminée de température, se trouver dans un premier état et pour, au-dessus de la valeur seuil prédéterminée de température, se trouver dans un second état différent du premier état et dans lequel l'organe effaçable 536 sollicite le piston de freinage 521 dans la deuxième direction axiale, à l'encontre de l'organe ressort 20.

La valeur seuil prédéterminée est par exemple comprise entre environ 100 °C et 200 °C.

Dans la première configuration du système (non illustrée), lorsque la chambre de pression 22 est alimentée par la source d'agent de pression 37 alimentant la conduite de distribution 4, le piston de freinage 521 est dans sa position de repos dans laquelle il comprime l'organe ressort 20, il n'agit pas sur le premier support garniture 32 et il n'applique aucun effort sur le disque de frein 6 ; grâce à quoi le frein de parking 2 n'est pas appliqué.

Dans la deuxième configuration du système (partie gauche de la figure 6), lorsque la chambre de pression 22 est volontairement vidangée ou n'est pas alimentée par la source d'agent de pression 37, le piston de freinage 521 est dans sa position de travail dans laquelle il est sollicité par l'organe ressort 20, il agit directement sur le premier support garniture 32 par l'intermédiaire de l'extrémité libre 542 de sa tige de poussée 526 qui est au contact du premier support garniture 32, et il applique un effort prédéterminé sur le disque de frein 6 par l'intermédiaire de la garniture 7 respective ; grâce à quoi le frein de parking 2 est appliqué.

Dans cette deuxième configuration, l'organe effaçable 536 est dans son premier état où il autorise, ou ne bloque pas, la transmission de l'effort appliqué par le piston de freinage 521 sur le premier support garniture 32.

Dans la troisième configuration du système (partie droite de la figure 6), lorsque la chambre de pression 22 est vidangée ou n'est plus alimentée, de manière intempestive, et lorsque le véhicule ferroviaire n'est pas à l'arrêt, la température ambiante dans l'environnement du disque de frein 6 augmente jusqu'à être supérieure à la valeur seuil prédéterminée ; ce qui entraîne le changement d'état de l'organe effaçable 536 vers son second état où il se met en tension et s'allonge pour repousser le piston de freinage 521 dans la cavité 510 du corps 508, à l'encontre de l'organe ressort 20, de sorte que la tige de poussée 526 se trouve à distance du premier support garniture 32 et ne transmet plus l'effort au disque 6.

Dans cette troisième configuration, la tête 525 du piston de freinage 521 est donc à distance du premier tronçon 515 de la paroi interne 513 du corps 508.

Dans une quatrième configuration du système 1, lorsque la température repasse sous la valeur seuil prédéterminée, l'organe effaçable 536 retrouve son premier état dans lequel il ne sollicite pas li piston de freinage 521.

Le système 1 illustré sur la figure 6 peut comporter plusieurs organes effaçables 536 coopérant à la fois avec le corps et la tige de poussée et/ou avec le corps et la tête du piston de freinage.

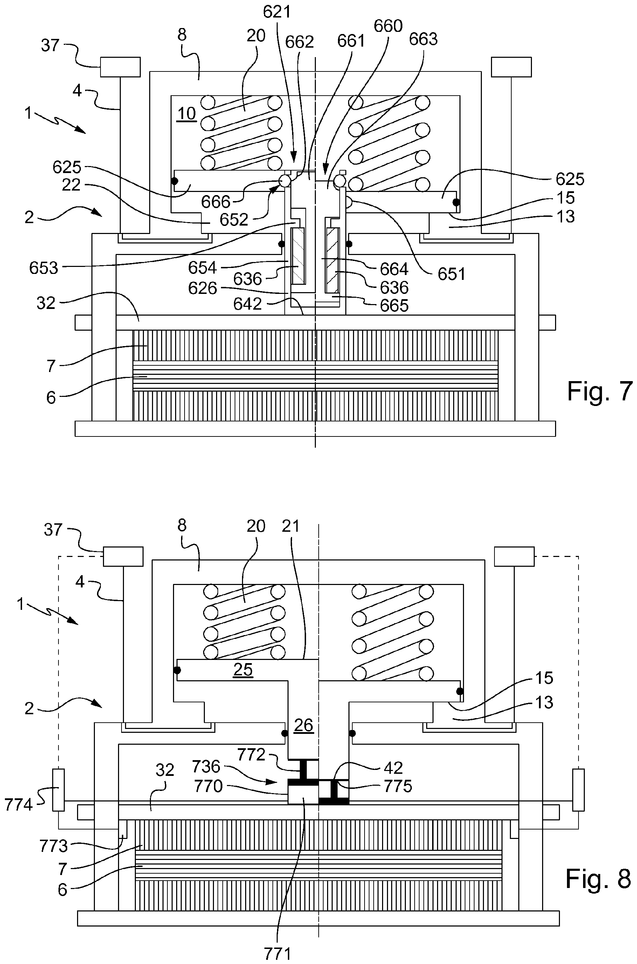

La figure 7 représente un cinquième mode de réalisation du système de freinage ferroviaire tel que décrit en référence à la figure 1.

D'une manière générale, on a employé pour les éléments similaires, les mêmes numéros de références, sauf pour le piston de freinage et l'organe effaçable de transmission d'effort pour lesquels les numéros de références ont été additionnés du nombre 600.

La tête 625 et la tige de poussée 626 du piston de freinage 621 sont ici distinctes l'une de l'autre ; et le piston de freinage 621 comporte un mécanisme débrayable 660 d'assujettissement mécanique de la tige de poussée 626 à la tête 625, en fonction de l'état de l'organe effaçable de transmission d'effort 636.

La tête 625 du piston de freinage 621 est pourvue d'un renfoncement circulaire 651.

La tige de poussée 626 du piston de freinage 621 est pourvue d'une fenêtre 652 ménagée à une extrémité qui est opposée à l'extrémité libre 642 au contact du premier support garniture 32, et d'une nervure 653 ménagée en saillie d'une paroi principale 654 s'étendant entre la fenêtre 652 et l'extrémité libre 642. La nervure 653 saille dans la cavité 10, hors de la chambre de pression 22, et forme une butée, appelée seconde butée.

Le mécanisme débrayable 660 comporte un corps 661 présentant un premier tronçon 663 dans lequel est ménagé un logement ici semi-circulaire 662, un deuxième tronçon 664 s'étendant le premier tronçon 663, jusqu'à un troisième tronçon 665 opposé au premier tronçon 663.

Le deuxième tronçon 664 s'étend en regard de la paroi principale 654 de la tige de poussée 626, le premier tronçon 663 est disposé au moins partiellement en regard de la fenêtre 652 de cette tige de poussée 626, et le troisième tronçon 665 est situé entre la nervure 653 et l'extrémité libre 642 de cette tige de poussée 626. Ce troisième tronçon 665 forme une butée appelée première butée.

Le mécanisme débrayable 660 comporte en outre un organe de verrouillage mobile 666 formé par exemple par une bille sphérique, et logé au moins partiellement dans la fenêtre 652 de la tige de poussée 626.

L'organe effaçable de transmission d'effort 636 est ici formé par une pièce interposée entre la première butée formée par le troisième tronçon 665 du corps 661 du mécanisme débrayable 660 et la seconde butée formée par la nervure 653 ménagée sur la tige de poussée 626.

L'organe effaçable 636 est ici réalisé en un matériau à mémoire de forme, par exemple un alliage de titane et de nickel et est configuré pour, sous une valeur seuil prédéterminée de température, se trouver dans un premier état dans lequel il assujettit mécaniquement la tige de poussée 626 et la tête 625 du piston de freinage 621 et pour, au-dessus de la valeur seuil prédéterminée de température, se trouver dans un second état différent du premier état et dans lequel il dés-assujettit mécaniquement la tige de poussée 626 et la tête 625 du piston de freinage 621.

La valeur seuil prédéterminée est par exemple comprise entre environ 100 °C et 200 °C.

Dans la première configuration du système (non illustrée), lorsque la chambre de pression 22 est alimentée par la source d'agent de pression 37 alimentant la conduite de distribution 4, le piston de freinage 621 est dans sa position de repos dans laquelle il comprime l'organe ressort 20, il n'agit pas sur le premier support garniture 32 et il n'applique aucun effort sur le disque de frein 6 ; grâce à quoi le frein de parking 2 n'est pas appliqué.

Dans la deuxième configuration du système (partie gauche de la figure 7), lorsque la chambre de pression 22 est volontairement vidangée ou n'est pas alimentée par la source d'agent de pression 37, le piston de freinage 621 est dans sa position de travail dans laquelle il est sollicité par l'organe ressort 20, il agit directement sur le premier support garniture 32 par l'intermédiaire de l'extrémité libre 642 de sa tige de poussée 626 qui est au contact du premier support garniture 32, et il applique un effort prédéterminé sur le disque de frein 6 par l'intermédiaire de la garniture 7 respective ; grâce à quoi le frein de parking 2 est appliqué.

Dans cette deuxième configuration, , l'organe effaçable 636 est dans son premier état et le premier tronçon 663 du corps 661 du mécanisme débrayable 660 est disposé en regard de la fenêtre 652 de la tige de poussée, avec son logement 662 qui est décalé par rapport à cette fenêtre 652, et l'organe de verrouillage mobile 666 est logé à la fois dans cette fenêtre 625 et dans le renfoncement circulaire 651 de la tête 625 ; grâce à quoi la tête 625 et la tige de poussée 626 sont assujetties mécaniquement et permettent d'appliquer l'effort sur le disque 6.

Dans la troisième configuration du système (partie droite de la figure 7), lorsque la chambre de pression 22 est vidangée ou n'est plus alimentée, de manière intempestive, et lorsque le véhicule ferroviaire n'est pas à l'arrêt, la température ambiante dans l'environnement du disque de frein 6 augmente jusqu'à être supérieure à la valeur seuil prédéterminée ; ce qui entraîne le changement d'état de l'organe effaçable 636 vers son second état où il se met en tension et s'allonge.

Dans son second état, l'organe effaçable 636 sollicite le troisième tronçon 665 et entraîne en translation dans la première direction axiale le corps 661 du mécanisme débrayable 660, jusqu'à disposer le logement 662 ménagé dans le premier tronçon 663 en regard de la fenêtre 652 et libérer l'organe de verrouillage mobile 666 du renfoncement circulaire 651 de la tête 625 du piston de freinage 621 ; grâce à quoi la tête 625 et la tige de poussée 626 sont dés-assujetties mécaniquement.

Ainsi, la tête 625 du piston de freinage 521 passe de sa position de travail vers sa position fusible différente de sa position de repos, position fusible où elle est en butée contre le premier tronçon 15 de la paroi interne 13 du corps 8 ; de sorte à annuler l'effort appliqué sur le disque de frein 6.

Dans une quatrième configuration du système 1, lorsque la température repasse sous la valeur seuil prédéterminée, l'organe effaçable 636 retrouve son premier état dans lequel il assujettit mécanique tête 625 et la tige de poussée 626.

La figure 8 représente un sixième mode de réalisation du système de freinage ferroviaire tel que décrit en référence à la figure 1.

D'une manière générale, on a employé pour les éléments similaires, les mêmes numéros de références, sauf pour l'organe effaçable de transmission d'effort pour lesquels les numéros de références ont été additionnés du nombre 700.

L'organe effaçable de transmission d'effort 736 est ici disposé dans l'espace de serrage 14 du corps 8, entre la tige de poussée 26 du piston de freinage 21 et le premier support garniture 32.

Cet organe effaçable de transmission d'effort 736 est formé par un vérin 770 ayant une chambre 771 posée sur le premier support garniture 32 et un bras mobile 772 partiellement logé dans la chambre 771 et présentant une extrémité libre 775 fixée solidairement à l'extrémité libre 42 de la tige de poussée 26 du piston de freinage.

Le système 1 comporte un capteur de température 773 disposé à proximité immédiate du disque 6 et des garnitures 7, une unité de contrôle et de commande 774 connectée au capteur de température 773 et configuré pour contrôler et commander le bras mobile 772 du vérin en fonction de la valeur mesurée de température ambiante par le capteur 773.

Le système 1 comporte en outre un conduit de raccordement 773, ici pneumatique, débouchant dans la chambre 771 du vérin 770 et connecté à la source d'alimentation 37 par l'intermédiaire de l'unité de contrôle et de commande 774.

Le bras mobile 772 est configuré pour admettre, sous une valeur seuil prédéterminée de température, une position déployée (à gauche de la figure 8) dans laquelle il transmet l'effort appliqué par le piston de freinage 21 au premier support garniture 32 et donc à la garniture 7 respective et au disque 6 et pour admettre, au-dessus de la valeur seuil prédéterminée de température, une position rétractée (à droite de la figure 8) dans laquelle il ne transmet plus cet effort.

La valeur seuil prédéterminée est par exemple comprise entre environ 100 °C et 200 °C.

Dans la première configuration du système (non illustrée), lorsque la chambre de pression 22 est alimentée par la source d'agent de pression 37 alimentant la conduite de distribution 4, le piston de freinage 21 est dans sa position de repos dans laquelle il comprime l'organe ressort 20, il n'agit pas sur le premier support garniture 32 et il n'applique aucun effort sur le disque de frein 6 ; grâce à quoi le frein de parking 2 n'est pas appliqué.

Dans la deuxième configuration du système (partie gauche de la figure 8), lorsque la chambre de pression 22 est volontairement vidangée ou n'est pas alimentée par la source d'agent de pression 37, le piston de freinage 21 est dans sa position de travail dans laquelle il est sollicité par l'organe ressort 20, il agit sur le premier support garniture 32 par l'intermédiaire du bras mobile 772 de l'organe effaçable de transmission d'effort 736, et il applique un effort prédéterminé sur le disque de frein 6 par l'intermédiaire de la garniture 7 respective ; grâce à quoi le frein de parking 2 est appliqué.

Dans cette deuxième configuration, la chambre 771 est au partiellement remplie d'un agent de pression et le bras mobile 772 se trouve dans sa position déployée.

Dans la troisième configuration du système (partie droite de la figure 8), lorsque la chambre de pression 22 est vidangée ou n'est plus alimentée, de manière intempestive, et lorsque le véhicule ferroviaire n'est pas à l'arrêt, la température ambiante dans l'environnement du disque de frein 6 augmente jusqu'à être supérieure à la valeur seuil prédéterminée ; l'unité de contrôle et de commande 774 commande la vidange de la chambre 771 et le bras mobile 772 passe de sa position déployée à sa position rétractée pour forcer le déplacement du piston de freinage 21 de sa position de travail vers sa position fusible différente de sa position de repos, position fusible où il est en butée contre la paroi interne 13 du corps 8 et, plus précisément, où sa tête 25 vient en appui contre le premier tronçon 15 de cette paroi interne 13, de sorte à annuler l'effort appliqué sur le disque de frein 6.

Le vérin 770 peut être un vérin hydraulique ou électrique plutôt que pneumatique ; et le système illustré sur la figure 8 peut comporter plusieurs vérins.

Dans une variante non illustrée, le piston de freinage du système illustré sur la figure 8 peut en outre comporter un mécanisme débrayable similaire à celui décrit en référence à la figure 7. Le cas échéant, le vérin peut être disposé dans la cavité du corps du système et son bras mobile peut être configuré pour agir sur le premier tronçon du corps du mécanisme débrayable afin d'assujettir ou non mécaniquement la tête et la tige de poussée en vue d'appliquer ou d'annuler l'effort sur le disque, appliqué directement par le piston de freinage qui peut coopérer avec le support garniture.

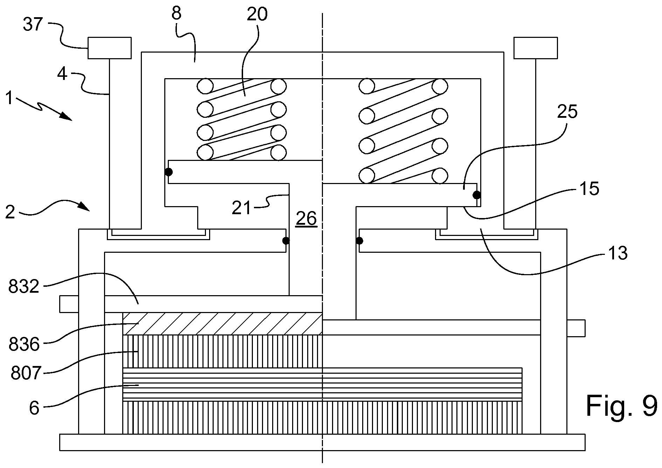

La figure 9 représente un septième mode de réalisation du système de freinage ferroviaire tel que décrit en référence à la figure 1.

D'une manière générale, on a employé pour les éléments similaires, les mêmes numéros de références, sauf pour la garniture et l'organe effaçable de transmission d'effort pour lesquels les numéros de références ont été additionnés du nombre 800.

L'organe effaçable de transmission d'effort 836 est ici formé par une couche adhésive fusible interposée entre le premier support garniture 832 et la garniture 807 respective et réalisée en un matériau prédéterminé qui, sous une valeur seuil prédéterminée de température, assujettit mécaniquement cette garniture 807 sur le support garniture 832 pour transmettre l'effort appliqué par ce dernier sur le disque 6 disque et qui, au-dessus de la valeur seuil prédéterminée de température, libère la garniture 807 du support garniture 832 pour annuler cet effort.

La valeur seuil prédéterminée est par exemple comprise entre environ 100 °C et 200 °C et la couche adhésive est par exemple à base de Vinyl-phenolic.

Dans la première configuration du système (non illustrée), lorsque la chambre de pression 22 est alimentée par la source d'agent de pression 37 alimentant la conduite de distribution 4, le piston de freinage 21 est dans sa position de repos dans laquelle il comprime l'organe ressort 20, il n'agit pas sur le premier support garniture 32 et il n'applique aucun effort sur le disque de frein 6 ; grâce à quoi le frein de parking 2 n'est pas appliqué.

Dans la deuxième configuration du système (partie gauche de la figure 9), lorsque la chambre de pression 22 est volontairement vidangée ou n'est pas alimentée par la source d'agent de pression 37, le piston de freinage 21 est dans sa position de travail dans laquelle il est sollicité par l'organe ressort 20, il agit sur le premier support garniture 832 qui agit sur la garniture 807 respective par l'intermédiaire de la couche adhésive 836, et il applique un effort prédéterminé sur le disque de frein 6 par l'intermédiaire de la garniture 807 respective ; grâce à quoi le frein de parking 2 est appliqué.

Dans la troisième configuration du système (partie droite de la figure 2), lorsque la chambre de pression 22 est vidangée ou n'est plus alimentée, de manière intempestive, et lorsque le véhicule ferroviaire n'est pas à l'arrêt, la température ambiante dans l'environnement du disque de frein 6 augmente jusqu'à être supérieure à la valeur seuil prédéterminée ; ce qui entraîne un changement d'état de la couche adhésive 836 jusque par exemple sa disparition, libérant ainsi la garniture 7 de sorte à forcer le déplacement du piston de freinage 21 de sa position de travail vers sa position fusible différente de sa position de repos, position fusible où il est en butée contre la paroi interne 13 du corps 8 et, plus précisément, où sa tête 25 vient en appui contre le premier tronçon 15 de cette paroi interne 13, de sorte à annuler l'effort appliqué sur le disque de frein 6.

Dans une variante non illustrée, la couche adhésive fusible est remplacée par au moins un plot de fixation prenant racine sur l'un du premier support garniture ou de la garniture et étant reçu dans au moins un orifice de l'autre de la garniture ou du premier support garniture.

Dans d'autres variantes non illustrées :
- le piston de freinage des systèmes illustrés sur les figures 1 à 6 et 9 peut en outre comporter un mécanisme débrayable comme celui décrit en référence à la figure 7 ;
- l'agent de pression est hydraulique plutôt que pneumatique ;-il ne s'agit pas d'un agent de pression mais plutôt d'une alimentation électrique du piston de freinage et, le cas échéant, le système peut être dépourvu de l'organe ressort ;
- la compression des ressorts peut-être générée par un dispositif électromécanique plutôt que par un agent de pression pneumatique ou hydraulique ; et/ou
- le système de freinage ferroviaire forme un étrier pivotant ou un étrier à un ou deux leviers déformables, à la manière d'une une timonerie de freinage, plutôt d'un étrier flottant.

On rappelle plus généralement que l'invention ne se limite pas aux exemples décrits et représentés.

## Revendications

1. Système de freinage ferroviaire pour véhicule ferroviaire à organes de freinage (5) à au moins une garniture (7 ; 807) et à au moins un disque (6), comportant un frein de parking (2) ayant un corps (8 ; 508) présentant une cavité (10 ; 510), un support garniture (32 ; 832) mobile par rapport audit corps (8 ; 508) et configuré pour agir sur au moins un dit organe de freinage (6, 7 ; 807), ainsi qu'un actionneur (19) comportant un piston de freinage (21 ; 321 ; 521 ; 621) au moins partiellement logé dans ladite cavité (10 ; 510), mobile par rapport audit corps (8 ; 508) et configuré pour agir sur ledit support garniture (32 ; 832) ; ledit système (1) présentant une première configuration où ledit piston de freinage (21 ; 321 ; 521 ; 621) est dans une position de repos dans laquelle il n'agit pas sur ledit support garniture (32 ; 832) et il n'applique aucun effort sur ledit au moins un organe de freinage (6, 7 ; 807), grâce à quoi ledit frein de parking (2) n'est pas appliqué, ainsi qu'une deuxième configuration où ledit piston de freinage (21 ; 321 ; 521 ; 621) est dans une position de travail dans laquelle il agit sur ledit support garniture (32 ; 832) et il applique un effort prédéterminé sur ledit au moins un organe de freinage (6, 7 ; 807), grâce à quoi ledit frein de parking (2) est appliqué ; ledit système (1) étant **caractérisé en ce qu'**il présente en outre une troisième configuration où, lorsque ledit véhicule ferroviaire n'est pas à l'arrêt et que la température ambiante dans l'environnement dudit organe de freinage (6, 7 ; 807) est supérieure à une valeur seuil prédéterminée, il force le déplacement dudit piston de freinage (21 ; 321 ; 521 ; 621) de sa position de travail vers une position fusible différente de sa position de repos, position fusible dans laquelle l'effort appliqué sur ledit au moins un organe de freinage (6, 7 ; 807) est limité ou annulé.

2. Système selon la revendication 1, **caractérisé en ce que** ledit actionneur (19) comporte en outre au moins un organe ressort (20) logé dans ladite cavité (10 ; 510), ledit piston de freinage (21 ; 321 ; 521 ; 621) délimite avec ledit corps (8 ; 508) une chambre de pression (22 ; 522) configurée pour être raccordée par un conduit (29) à une source d'agent de pression (37) et, dans ladite première configuration dudit système (1), ladite chambre de pression (22 ; 522) est alimentée par ladite source d'agent de pression (37) tandis que dans ladite deuxième configuration dudit système (1), ladite chambre de pression (22 ; 522) n'est pas alimentée par ladite source d'agent de pression (37).

3. Système selon l'une des revendications 1 et 2, **caractérisé en ce qu'**il comporte un organe effaçable de transmission d'effort (36 ; 136 ; 236 ; 336 ; 436 ; 536 ; 636 ; 736 ; 836) distinct dudit actionneur (19) et dudit support garniture (32 ; 832) et configuré pour mettre ledit piston de freinage (21 ; 321 ; 521 ; 621) dans sa position fusible.

4. Système selon la revendication 3, **caractérisé en ce que** ledit organe effaçable de transmission d'effort (36 ; 236 ; 336 ; 436 ; 736) est disposé dans ledit corps (8) entre ledit piston de freinage (21 ; 321) et ledit support garniture (32).

5. Système selon la revendication 3, **caractérisé en ce que** ledit organe effaçable de transmission d'effort (136 ; 436 ; 836) est disposé dans ledit corps (8) entre ledit support garniture (32 ; 832) et ladite garniture (7 ; 807).

6. Système selon l'une quelconque des revendications 3 à 5, **caractérisé en ce que**, dans sa position fusible, ledit piston de freinage (21 ; 321) est mis en butée contre une paroi interne (13) dudit corps (8) délimitant ladite cavité (10).

7. Système selon l'une quelconque des revendications 3 à 6, **caractérisé en ce que** ledit organe effaçable de transmission d'effort (36 ; 136) est formé par au moins une pièce réalisée en un matériau prédéterminé qui, sous ladite valeur seuil prédéterminée de température, se trouve dans un état rigide lui permettant de transmettre l'effort appliqué par ledit piston de freinage (21) et/ou par ledit support garniture (32) sur ledit au moins un organe de freinage (6, 7) et qui, au-dessus de ladite valeur seuil prédéterminée de température, se trouve dans un état déformé où ledit organe effaçable (36 ; 136) ne transmet plus ledit effort.

8. Système selon l'une quelconque des revendications 3 à 6, **caractérisé en ce que** ledit organe effaçable de transmission d'effort (236) est formé par une première pièce (238) et une deuxième pièce (240) assujettie mécaniquement par une liaison frangible (243), notamment par collage ou soudage ou emmanchement, sur ladite première pièce (238) ; avec, sous ladite valeur seuil prédéterminée de température, lesdites première et deuxième pièces (238, 240) qui sont solidaires et permettent de transmettre l'effort appliqué par ledit piston de freinage (21) et/ou par ledit support garniture (32) sur ledit au moins un organe de freinage (6, 7) et avec, au-dessus de ladite valeur seuil prédéterminée de température, ladite deuxième pièce (240) qui se désolidarise de ladite première pièce (238) au niveau de ladite liaison frangible (243) et qui est entraînée en translation par ledit piston de freinage (21) et/ou par ledit support garniture (32) par rapport à ladite première pièce (238) ; ledit organe effaçable (236) ne transmettant plus ledit effort.

9. Système selon l'une quelconque des revendications 3 à 6, **caractérisé en ce que** ledit organe effaçable de transmission d'effort (336 ; 436) est formé par une enveloppe (344 ; 444) déformable remplie seulement partiellement d'un volume d'un matériau prédéterminé (345 ; 445) qui, sous ladite valeur seuil prédéterminée de température, se trouve dans un état rigide lui permettant de transmettre l'effort appliqué par ledit piston de freinage (321 ; 21) et/ou par ledit support garniture (32) sur ledit au moins un organe de freinage (6, 7) et qui, au-dessus de ladite valeur seuil prédéterminée de température, flue et migre dans une zone vide de ladite enveloppe (344 ; 444), laquelle enveloppe se déforme de sorte que ledit organe effaçable (336 ; 436) ne transmet plus ledit effort.

10. Système selon la revendication 3, **caractérisé en ce que** ledit organe effaçable de transmission d'effort (536) est formé par une pièce interposée entre une tige de poussée (526) dudit piston de freinage (521) et une paroi interne (513) dudit corps (508) délimitant ladite cavité (510), ladite pièce étant réalisée en un matériau à mémoire de forme qui, sous ladite valeur seuil prédéterminée de température, se trouve dans un premier état permettant de transmettre l'effort appliqué par ledit piston de freinage (521) sur ledit au moins un organe de freinage (6, 7) et qui, au-dessus de ladite valeur seuil prédéterminée de température, se trouve dans second état dans lequel elle repousse ledit piston de freinage (521) dans ladite cavité (510) de sorte que ledit organe effaçable (536) empêche de transmettre ledit effort.

11. Système selon la revendication 3, **caractérisé en ce que** ledit piston de freinage (621) est pourvu d'une tête (625) logée dans ladite cavité (10), d'une tige de poussée (626) distincte de ladite tête (625), saillant de ladite cavité (10) et présentant une extrémité libre (642) en appui sur ledit support garniture (32), et d'un mécanisme débrayable (660) d'assujettissement mécanique de ladite tige de poussée (626) à ladite tête (625) ; et ledit organe effaçable de transmission d'effort (636) est formé par une pièce interposée entre une première butée formée par un tronçon (665) dudit mécanisme débrayable (660) et une seconde butée formée par une nervure (653) ménagée sur ladite tige de poussée (626), ladite pièce étant réalisée en un matériau à mémoire de forme qui, sous ladite valeur seuil prédéterminée de température, se trouve dans un premier état où ladite tige de poussée (626) et ladite tête (625) sont assujetties mécaniquement de sorte à appliquer l'effort sur ledit au moins un organe de freinage (6, 7) et qui, au-dessus de ladite valeur seuil prédéterminée de température, se trouve dans second état dans lequel elle actionne ledit mécanisme débrayable (660) de sorte à dés-assujettir mécaniquement ladite tige de poussée (626) et ladite tête (625) et ainsi supprimer ledit effort.

12. Système selon l'une des revendications 3 et 4, **caractérisé en ce que** ledit organe effaçable de transmission d'effort (736) est formé par un vérin (770) pourvu d'un bras mobile (772) qui, sous ladite valeur seuil prédéterminée de température, admet une position déployée dans laquelle il transmet l'effort appliqué par ledit piston de freinage (21) et/ou par ledit support garniture (32) sur ledit au moins un organe de freinage (6, 7) et qui, au-dessus de ladite valeur seuil prédéterminée de température, admet une position rétractée dans laquelle il ne transmet plus ledit effort.

13. Système selon la revendication 12, **caractérisé en ce qu'**il comporte en outre un capteur de température (773) disposé à proximité immédiate dudit au moins un organe de freinage (7) ainsi qu'une unité de contrôle et de commande (774) dudit vérin (770) configuré pour contrôler et commander ledit bras mobile (772) en fonction de ladite température ambiante.

14. Système selon la revendication 3, **caractérisé en ce que** ledit organe effaçable de transmission d'effort est formé par une pièce (836) interposée entre ledit support garniture (832) et ladite au moins une garniture (807) et réalisée en un matériau prédéterminé qui, sous ladite valeur seuil prédéterminée de température, assujettit mécaniquement ladite au moins une garniture (807) sur ledit support garniture (832) pour transmettre l'effort appliqué par ce dernier sur ledit au moins un disque (6) et qui, au-dessus de ladite valeur seuil prédéterminée de température, libère ladite au moins une garniture (807) dudit support garniture (832) pour annuler ledit effort.

15. Système selon la revendication 14, caractérisé en ce ladite pièce (836) forme une couche adhésive interposée entre ledit support garniture (832) et ladite au moins une garniture (807), ou est formée par au moins un plot de fixation prenant racine sur l'un dudit support garniture ou de ladite au moins une garniture et étant reçu dans au moins un orifice de l'autre de ladite au moins une garniture ou dudit support garniture.

## Patentansprüche

1. Schienenbremssystem für Schienenfahrzeuge mit Bremsgliedern (5), die zumindest einen Bremsbelag (7; 807) und zumindest eine Bremsscheibe (6) aufweisen, enthaltend eine Feststellbremse (2), die einen Bremskörper (8; 508) mit einem Hohlraum (10; 510), einen Bremsbelagträger (32; 832), der relativ zu dem Bremskörper (8; 508) beweglich und dazu ausgelegt ist, auf zumindest eines der Bremsglieder (6, 7; 807) einzuwirken, und ein Betätigungsglied (19) aufweist, das einen Bremskolben (21; 321; 521; 621) enthält, der zumindest teilweise in dem Hohlraum (10; 510) aufgenommen ist, relativ zu dem Bremskörper (8; 508) beweglich und dazu ausgelegt ist, auf den Bremsbelagträger (32; 832) einzuwirken; wobei das System (1) eine erste Konfiguration aufweist, in der sich der Bremskolben (21; 321; 521; 621) in einer Ruheposition befindet, in welcher er nicht auf den Bremsbelagträger (32; 832) einwirkt und keine Kraft auf das zumindest eine Bremsglied (6, 7; 807) aufbringt, wodurch die Feststellbremse (2) nicht betätigt wird, sowie eine zweite Konfiguration, in der sich der Bremskolben (21; 321; 521; 621) in einer Arbeitsposition befindet, in welcher er auf den Bremsbelagträger (32; 832) einwirkt und eine vorbestimmte Kraft auf das zumindest eine Bremsglied (6, 7; 807) ausbringt, wodurch die Feststellbremse (2) betätigt wird; wobei das System (1) **dadurch gekennzeichnet ist, dass** es ferner eine dritte Konfiguration aufweist, in welcher dann, wenn das Schienenfahrzeug nicht stillsteht und die Umgebungstemperatur in der Umgebung des Bremsglieds (6, 7; 807) über einem vorbestimmten Schwellenwert liegt, es die Verschiebung des Bremskolbens (21; 321; 521; 621) aus seiner Arbeitsposition in eine von seiner Ruheposition verschiedene Verformungsposition erzwingt, in welcher Verformungsposition die auf das zumindest eine Bremsglied (6, 7; 807) aufgebrachte Kraft begrenzt oder aufgehoben wird.

2. System nach Anspruch 1, **dadurch gekennzeichnet, dass** das Betätigungsglied (19) ferner zumindest ein in dem Hohlraum (10; 510) aufgenommenes Federglied (20) enthält, wobei der Bremskolben (21; 321; 521; 621) mit dem Bremskörper (8; 508) eine Druckkammer (22; 522) begrenzt, die dazu ausgelegt ist, über eine Leitung (29) mit einer Druckmittelquelle (37) verbunden zu werden, und wobei in der ersten Konfiguration des Systems (1) die Druckkammer (22; 522) von der Druckmittelquelle (37) versorgt wird, während in der zweiten Konfiguration des Systems (1) die Druckkammer (22; 522) nicht von der Druckmittelquelle (37) versorgt wird.

3. System nach einem der Ansprüche 1 und 2, **dadurch gekennzeichnet, dass** es ein nachgiebiges Kraftübertragungselement (36; 136; 236; 336; 436; 536; 636; 736; 836) enthält, das von dem Betätigungsglied (19) und dem Bremsbelagträger (32; 832) getrennt und dazu ausgelegt ist, den Bremskolben (21; 321; 521; 621) in seine Verformungsposition zu bringen.

4. System nach Anspruch 3, **dadurch gekennzeichnet, dass** das nachgiebige Kraftübertragungselement (36; 236; 336; 436; 736) im Bremskörper (8) zwischen Bremskolben (21; 321) und Bremsbelagträger (32) angeordnet ist.

5. System nach Anspruch 3, **dadurch gekennzeichnet, dass** das nachgiebige Kraftübertragungselement (136; 436; 836) im Bremskörper (8) zwischen Bremsbelagträger (32; 832) und Bremsbelag (7; 807) angeordnet ist.

6. System nach einem der Ansprüche 3 bis 5, **dadurch gekennzeichnet, dass** der Bremskolben (21; 321) in seiner Verformungsposition in Anschlag an einer den Hohlraum (10) begrenzenden Innenwand (13) des Bremskörpers (8) gebracht ist.

7. System nach einem der Ansprüche 3 bis 6, **dadurch gekennzeichnet, dass** das nachgiebige Kraftübertragungselement (36; 136) aus zumindest einem Teil aus einem vorbestimmten Material gebildet ist, das sich unterhalb des vorbestimmten Temperaturschwellenwertes in einem starren Zustand befindet, der es ihm ermöglicht, die vom Bremskolben (21) und/oder vom Bremsbelagträger (32) aufgebrachte Kraft auf das zumindest eine Bremsglied (6, 7) zu übertragen, und das sich oberhalb des vorbestimmten Temperaturschwellenwertes in einem verformten Zustand befindet, in dem das nachgiebige Element (36; 136) die Kraft nicht mehr überträgt.

8. System nach einem der Ansprüche 3 bis 6, **dadurch gekennzeichnet, dass** das nachgiebige Kraftübertragungselement (236) aus einem ersten Teil (238) und einem zweiten Teil (240) gebildet ist, das durch eine Sollbruchverbindung (243), insbesondere durch Verkleben oder Verschweißen oder durch Einpassen, mechanisch mit dem ersten Teil (238) verbunden ist; wobei unterhalb des vorbestimmten Temperaturschwellenwertes das erste und das zweite Teil (238, 240) fest miteinander verbunden sind und die Übertragung der durch den Bremskolben (21) und/oder den Bremsbelagträger (32) aufgebrachten Kraft auf das zumindest eine Bremsglied (6, 7) ermöglichen, und wobei oberhalb des vorbestimmten Temperaturschwellenwertes das zweite Teil (240) sich vom ersten Teil (238) im Bereich der Sollbruchverbindung (243) löst und durch den Bremskolben (21) und/oder den Bremsbelagträger (32) in Bezug auf das erste Teil (238) verschoben wird; wobei das nachgiebige Element (236) die Kraft nicht mehr überträgt.

9. System nach einem der Ansprüche 3 bis 6, **dadurch gekennzeichnet, dass** das nachgiebige Kraftübertragungselement (336; 436) aus einem verformbaren Mantel (344; 444) gebildet ist, der nur teilweise mit einem Volumen aus einem vorbestimmten Material (345; 445) gefüllt ist, das sich unterhalb des vorbestimmten Temperaturschwellenwerts in einem starren Zustand befindet, der es ihm ermöglicht, die vom Bremskolben (321; 21) und/oder vom Bremsbelagträger (32) aufgebrachte Kraft auf das zumindest eine Bremsglied (6, 7) zu übertragen, und das oberhalb des vorbestimmten Temperaturschwellenwerts zerfließt und in einen freigelassenen Bereich des Mantels (344; 444) wandert, welcher Mantel sich so verformt, dass das nachgiebige Element (336; 436) die Kraft nicht mehr überträgt.

10. System nach Anspruch 3, **dadurch gekennzeichnet, dass** das nachgiebige Kraftübertragungselement (536) aus einem Teil gebildet ist, das zwischen einer Schubstange (526) des Bremskolbens (521) und einer den Hohlraum (510) begrenzenden Innenwand (513) des Bremskörpers (508) angeordnet ist, wobei das Teil aus einem Formgedächtnismaterial besteht, das sich unterhalb des vorbestimmten Temperaturschwellenwertes in einem ersten Zustand befindet, der es ermöglicht, die vom Bremskolben (521) aufgebrachte Kraft auf das zumindest eine Bremsglied (6, 7) zu übertragen, und das sich oberhalb des vorbestimmten Temperaturschwellenwertes in einem zweiten Zustand befindet, in dem es den Bremskolben (521) in den Hohlraum (510) drückt, so dass das nachgiebige Element (536) die Übertragung dieser Kraft verhindert.

11. System nach Anspruch 3, **dadurch gekennzeichnet, dass** der Bremskolben (621) mit einem im Hohlraum (10) aufgenommenen Kopf (625), mit einer vom Kopf (625) getrennten Schubstange (626), die aus dem Hohlraum (10) herausragt und deren freies Ende (642) sich an dem Bremsbelagträger (32) abstützt, und mit einem Ausrückmechanismus (600) zum mechanischen Verbinden der Schubstange (626) mit dem Kopf (625) versehen ist; und das nachgiebige Kraftübertragungselement (636) aus einem Teil gebildet ist, das zwischen einem ersten Anschlag, der aus einem Abschnitt (665) des Ausrückmechanismus (660) gebildet ist, und einem zweiten Anschlag, der aus einer an der Schubstange (626) vorgesehenen Rippe (653) gebildet ist, angeordnet ist, wobei das Teil aus einem Formgedächtnismaterial hergestellt ist, das unterhalb des vorbestimmten Temperaturschwellenwertes sich in einem ersten Zustand befindet, in dem die Schubstange (626) und der Kopf (625) mechanisch verbunden sind, so dass die Kraft auf das zumindest eine Bremsglied (6, 7) aufgebracht wird, und das sich oberhalb des vorbestimmten Temperaturschwellenwertes in einem zweiten Zustand befindet, in dem es den Ausrückmechanismus (660) betätigt, so dass die Schubstange (626) und der Kopf (625) mechanisch getrennt werden und dadurch die Kraft aufgehoben wird.

12. System nach einem der Ansprüche 3 und 4, **dadurch gekennzeichnet, dass** das nachgiebige Kraftübertragungselement (736) aus einem Kraftzylinder (770) gebildet ist, der mit einem beweglichen Arm (772) versehen ist, der unterhalb des vorbestimmten Temperaturschwellenwertes eine ausgefahrene Position einnimmt, in der er die durch den Bremskolben (21) und/oder durch den Bremsbelagträger (32) aufgebrachte Kraft auf das zumindest eine Bremsglied (6, 7) überträgt, und der oberhalb des vorbestimmten Temperaturschwellenwertes eine eingefahrene Position einnimmt, in der er die Kraft nicht mehr überträgt.

13. System nach Anspruch 12, **dadurch gekennzeichnet, dass** es ferner einen Temperatursensor (773) enthält, der in unmittelbarer Nähe des zumindest einen Bremsglieds (7) angeordnet ist, sowie eine Steuer- und Kontrolleinheit (774) für den Kraftzylinder (770), die dazu ausgelegt ist, den beweglichen Arm (772) in Abhängigkeit von der Umgebungstemperatur zu steuern und zu kontrollieren.

14. System nach Anspruch 3, **dadurch gekennzeichnet, dass** das nachgiebige Kraftübertragungselement aus einem Teil (836) gebildet ist, das zwischen dem Bremsbelagträger (832) und dem zumindest einen Bremsbelag (807) angeordnet ist und aus einem vorbestimmten Material hergestellt ist, das unterhalb des vorbestimmten Temperaturschwellenwertes den zumindest einen Bremsbelag (807) mechanisch mit dem Bremsbelagträger (832) verbindet, um die von letzterem aufgebrachte Kraft auf die zumindest eine Bremsscheibe (6) zu übertragen, und das oberhalb des vorbestimmten Temperaturschwellenwertes den zumindest einen Bremsbelag (807) vom Bremsbelagträger (832) freigibt, um die Kraft aufzuheben.

15. System nach Anspruch 14, **dadurch gekennzeichnet, dass** das Teil (836) eine Klebeschicht bildet, die zwischen dem Bremsbelagträger (832) und dem zumindest einen Bremsbelag (807) angeordnet ist, oder aus zumindest einem Befestigungszapfen gebildet ist, der von einem aus Bremsbelagträger oder dem zumindest einen Bremsbelag ausgeht und in zumindest einer Öffnung des anderen aus Bremsbelag oder Bremsbelagträger aufgenommen ist.

## Claims

1. A rail vehicle braking system for a rail vehicle having braking members (5) with at least one lining (7 ; 807) and at least one disk (6), comprising a parking brake (2) having a body (8 ; 508) presenting a cavity (10 ; 510), a lining mounting (32 ; 832) which is movable relative to said body (8 ; 508) and configured to act on at least one said braking member (6, 7 ; 807), as well as an actuator (19) comprising a braking piston (21 ; 321 ; 521 ; 621) at least partly accommodated in said cavity (10 ; 510), movable relative to said body (8 ; 508) and configured to act on said lining mounting (32 ; 832); said system (1) having a first configuration in which said braking piston (21 ; 321 ; 521 ; 621) is in a resting position in which it does not act on said lining mounting (32 ; 832) and it does not apply any load to said at least one braking member (6, 7 ; 807), whereby said parking brake (2) is not applied, as well as a second configuration in which said braking piston (21 ; 321 ; 521 ; 621) is in a working position in which it acts on said lining mounting (32 ; 832) and it applies a predetermined load to said at least one braking member (6, 7 ; 807), whereby said parking brake (2) is applied; said system (1) being **characterized in that** it furthermore has a third configuration in which, when said rail vehicle is not stationary and the ambient temperature in the environment of said braking member (6, 7 ; 807) is greater than a predetermined threshold value, it forces the movement of said braking piston (21 ; 321 ; 521 ; 621) from its working position into a fuse position different from its resting position, in which fuse position the load applied to said at least one braking member (6, 7 ; 807) is limited or cancelled

2. A system according to claim 1, **characterized in that** said actuator (19) further comprises at least one spring member (20) accommodated in said cavity (10 ; 510), said braking piston (21 ; 321 ; 521 ; 621) delimits with said body (8 ; 508) a pressure chamber (22 ; 522) configured to be connected by a pipe (29) to a source of pressure agent (37) and, in said first configuration of said system (1), said pressure chamber (22 ; 522) is supplied by said source of pressure agent (37) while in said second configuration of said system (1), said pressure chamber (22 ; 522) is not supplied by said source of pressure agent (37).

3. A system according to one of claims 1 and 2, **characterized in that** it comprises a retractable load transmission member (36 ; 136 ; 236 ; 336 ; 436 ; 536 ; 636 ; 736 ; 836) distinct from said actuator (19) and from said lining mounting (32 ; 832) and configured to place said braking piston (21 ; 321 ; 521 ; 621) in its fuse position.

4. A system according to claim 3, **characterized in that** said retractable load transmission member (36 ; 236 ; 336 ; 436 ; 736) is disposed in said body (8) between said braking piston (21 ; 321) and said lining mounting (32).

5. A system according to claim 3, **characterized in that** said retractable load transmission member (136 ; 436 ; 836) is disposed in said body (8) between said lining mounting (32 ; 832) and said lining (7 ; 807).

6. A system according to any one of claims 3 to 5, **characterized in that** in its fuse position, said braking piston (21 ; 321) is placed to bear against an inside wall (13) of said body (8) delimiting said cavity (10).

7. A system according to any one of claims 3 to 6, **characterized in that** said retractable load transmission member (36 ; 136) is formed by at least one part produced from a predetermined material which, under said predetermined threshold temperature value, is in a rigid state enabling it to transmit the load applied by said braking piston (21) and/or by said lining mounting (32) to said at least one braking member (6, 7) and which, above said predetermined threshold temperature value, is in a deformed state in which said retractable member (36 ; 136) no longer transmits said load.

8. A system according to any one of claims 3 to 6, **characterized in that** said retractable load transmission member (236) is formed by a first part (238) and a second part (240) mechanically connected by a frangible link (243), in particular by bonding or welding or insertion, to said first part (238); said first and second parts (238, 240) under said predetermined threshold temperature value, being connected together and enabling the load applied by said braking piston (21) and/or by said lining mounting (32) to be transmitted to said at least one braking member (6, 7) and, above said predetermined threshold temperature value, said second part (240) being disconnected from said first part (238) at the location of said frangible link (243) and being translationally driven by said braking piston (21) and/or by said lining mounting (32) relative to said first part (238) said retractable member (236) no longer transmitting said load.

9. A system according to any one of claims 3 to 6, **characterized in that** said retractable load transmission member (336 ; 436) is formed by a deformable envelope (344 ; 444) only partly filled with a volume of a predetermined material (345 ; 445) which, under said predetermined threshold temperature value, is in a rigid state enabling it to transmit the load applied by said braking piston (321 ; 21) and/or by said lining mounting (32) to said at least one braking member (6, 7) and which, above said predetermined threshold temperature value, creeps and migrates into an empty zone of said envelope (344 ; 444), which envelope deforms such that said retractable member (336 ; 436) no longer transmits said load.

10. A system according to claim 3, **characterized in that** said retractable load transmission member (536) is formed by a part interposed between a thrust rod (526) of said braking piston (521) and an inside wall (513) of said body (508) delimiting said cavity (510), said part being formed from shape-memory material which, under said predetermined threshold temperature value, is in a first state enabling transmission of the load applied by said braking piston (521) to said at least one braking member (6, 7) and which, above said predetermined threshold temperature value, is in a second state in which it pushes said braking piston (521) away into said cavity (510) such that said retractable member (536) prevents transmission of said load.

11. A system according to claim 3, **characterized in that** said braking piston (621) is provided with a head (625) accommodated in said cavity (10), with a thrust rod (626) distinct from said head (625), projecting from said cavity (10) and having a free end (642) bearing on said lining mounting (32), and with a releasable mechanism (660) for mechanically connecting said thrust rod (626) to said head (625); and said retractable load transmission member (636) is formed by a part interposed between a first stop formed by a section (665) of said releasable mechanism (660) and a second stop formed by a rib (653) provided on said thrust rod (626), said part being formed from shape memory material which, under said predetermined threshold temperature value, is in a first state in which said thrust rod (626) and said head (625) are mechanically connected so as to apply the load to said at least one braking member (6, 7) and which, above said predetermined threshold temperature value, is in a second state in which it actuates said releasable mechanism (660) so as to mechanically disconnect said thrust rod (626) and said head (625) and thereby eliminate said load.

12. A system according to one of claims 3 and 4, **characterized in that** said retractable load transmission member (736) is formed by an actuator (770) provided with a movable arm (772) which, under said predetermined threshold temperature value, has an extended position in which it transmits the load applied by said braking piston (21) and/or by said lining mounting (32) to said at least one braking member (6, 7) and which, above said predetermined threshold temperature value, has a retracted position in which it no longer transmits said load.

13. A system according to claim 12, **characterized in that** said system further comprises a temperature sensor (773) disposed in immediate proximity to said at least one braking member (7) as well as a control and command unit (774) of said actuator (770) configured to control and command said movable arm (772) according to said ambient temperature.

14. A system according to claim 3, **characterized in that** said retractable load transmission member is formed by a part (836) interposed between said lining mounting (832) and said at least one lining (807) and produced from a predetermined material which, under said predetermined threshold temperature value, mechanically connects said at least one lining (807) to said lining mounting (832) to transmit the load applied by the latter to said at least one disk (6) and which, above said predetermined threshold temperature value, frees said at least one lining (807) from said lining mounting (832) to cancel said load.

15. A system according to claim 14, **characterized in that** said part (836) forms an adhesive layer interposed between said lining mounting (832) and said at least one lining (807), or is formed by at least one fastening stud emerging from one of a said lining mounting or said at least one lining and being received in at least one aperture of the other of said at least one lining or said lining mounting.
